Europäisches Patentamt

European Patent Office

Office européen des brevets

(19)

(11) Publication number: 0 341 841

A2

(12) **EUROPEAN PATENT APPLICATION**

(21) Application number: 89303789.5

(22) Date of filing: 17.04.89

(51) Int. Cl.⁴: **G06F 13/40**

(30) Priority: 11.05.88 US 192778

(43) Date of publication of application:
15.11.89 Bulletin 89/46

(84) Designated Contracting States:
DE FR GB IT NL

(71) Applicant: DIGITAL EQUIPMENT
CORPORATION
146 Main Street
Maynard, MA 01754(US)

(72) Inventor: Buch, Bruce D.
21 Old Nourse Street
Westborough Massachusetts 01581(US)

(74) Representative: Goodman, Christopher et al
Eric Potter & Clarkson 14 Oxford Street
Nottingham NG1 5BP(GB)

(54) Data bus control circuit and technique including data latching for optimizing bus utilization.

(57) A means and method for optimizing bus utilization is disclosed. In addition to traditional computer system components, one or more latch circuits are coupled to a computer data bus. The latch circuits latch data states on the data bus after the bus has been driven to a desired state by a system driver node. Tri-state drivers are preferred. Once a data state has been latched, the associated driver may be disabled without affecting the data state on the bus. The data state may then be sampled at any time, and the integrity of the data state is preserved, until a new data state is driven onto the bus by a driver node. The latch circuit parameters allow any system driver to readily overcome the latch action, yet preserve the driven data state as logically valid until it is overwritten. Data sampling from the bus is restricted solely during driver enable periods. Bus utilization is optimized without undue sacrifices in system power requirements.

FIG. 5

## DATA BUS CONTROL CIRCUIT AND TECHNIQUE INCLUDING DATA LATCHING FOR OPTIMIZING BUS UTILIZATION

### Background Of The Invention

The present invention relates generally to the computer art. More particularly, the present invention pertains to the manipulation and transfer of data in a computer system. Specifically, the present invention relates to an improvement in data bus architecture, including a means and method for latching data states on a data bus to optimize bus utilization.

Generally, a bus comprises a grouping of signals, a communication link between one or more computer components and an associated communication (usage) protocol. The rate at which data can be transferred over the bus from one component to another has a direct effect on the operating speed for the overall computer system. Accordingly, bus utilization schemes or techniques seek to optimize the percentage of bus time which can be used for data transfer.

The various components of the computer system which are connected to the data bus are generally referred to as nodes. These nodes typically are characterized as either driving nodes or receiving nodes or both and typically comprise large scale integrated circuits or chips. Those nodes that act as drivers actively drive data onto the bus by forcing each line in the bus to assume a particular data state. Those nodes that act as receivers sample data from the bus after it has been driven to a particular state by a driver node. Communication between selected ones of the nodes in the computer system is accomplished under control of the bus protocol, which specifies the time-multipexing of data on the bus.

Baseband buses generally prohibit the driving of data onto the bus by more than one driver at a time. At least two reasons exist for this prohibition, namely, (1) simultaneously driving two or more data states onto the bus creates an indeterminate data state on the bus, which precludes the accurate transfer of any data state when the bus is then sampled by the receiving nodes, and (2) some types of drivers create electrically harmful or dangerous conditions if driven simultaneously on the same bus, such as noise, signal spikes and short circuits.

Typical systems now operate under this constraint in various ways to attempt to optimize data transfer rates and bus utilization. One well known scheme employs tri-state drivers and separate timing events to disable and enable successive driver nodes. Tri-state drivers create power transients which are harmful to the computer system at large when drivers connected to the same line simultaneously attempt to drive that line to conflicting states. Accordingly, one driver must be completely disabled before the succeeding driver is enabled. During the time period required for disabling one driver and enabling the next driver no data may be sampled from the data bus. Accordingly, this represents down time for the bus and reduces the bus utilization. This results in a reduction in data bandwidth, i.e., the amount of information transmitted per unit time, for the computer system. This shortcoming exists, even in light of significant advances in overall system timing, as the time required for driver enabling and disabling has not been reduced in proportion to the reduction in data transfer times afforded through other advances.

An alternative method for data transfer uses open terminal drivers. These open terminal devices drive the data bus lines to only a single state. The other state is provided through a static resistor which holds the data bus line in a particular state unless driven to an opposing state by a driver. Open terminal drivers may simultaneously drive a given bus line because all the active drivers are trying to drive the bus to the same state and the only opposing force is the relatively weaker resistor trying to drive the bus to the opposite state. In addition, no more current flows through the resistor when several devices are enabled than when only one driver is enabled. This method thus allows the overlap of the disable time for a first driver with the enable time for a second, succeeding driver.

However, the simple switch to the open-terminal driver configuration does not necessarily optimize bus utilization. The resistance used to pull non-driven bus lines to the opposing logic state presents a trade-off between bus power and bus speed. High impedance resistors provide for low power consumption, but restrict bus bandwidth. To obtain sufficiently high system bandwidth, these resistors must be low impedance to provide short signal transitions and readily overcome the capacitance of the bus and its nodes. However, lowering the impedance of these resistors increases the current drive required of the bus drivers and increases the power which must be dissipated by these resistors when the corresponding bus line is driven.

Accordingly, current techniques for data bus transfer control provide an undesirable or unattractive trade-off between system power requirements and data bus utilization. Tri-state drivers provide low power data transfer, but require unsatisfactory driver hand-off time (the time required for one driver to disable and another driver to enable for data transfer); open terminal drivers allow the enable and disable times for successive drivers to overlap, thus reducing inefficient hand-off time and increasing bus utilization, but increase the power requirements for the system - an increase which can represent unacceptable operating performance.

## SUMMARY OF THE INVENTION

The present invention seeks to overcome the deficiencies of the currently available schemes through an improved data bus control means and method which optimizes bus utilization rates, without unduly increasing system power requirements. The means and method for data bus control of the present invention captures the advantages of the various currently available methods, without incorporating the deficiencies of those methods.

A specific application of the present invention lies in the provision of a means and method for data bus control in which tri-state drivers provide data to the data bus without restricting the data bus utilization rate. More specifically, the present invention provides a means and method for data bus control which latches each data state on the data bus until a succeeding data state is driven onto the bus. This, in turn, provides a data bus control technique which allows a driving node to be disabled while preserving the integrity of the data extant on the bus to allow sampling of the data.

The advantages of the present invention may be had by use of the following disclosed preferred embodiment. The present invention and the preferred embodiment allow sampling of data from the data bus at any time after a driving node drives data onto the bus and the data is latched onto the bus and before another driving node begins to drive data onto the bus. The sampling occurs even after the driving node is disabled. By permitting the overlap of disabling and sampling periods, the present invention optimizes the data bus utilization rates and the power consumption needs for the computer system. The present invention uses a latching technique for latching data on a bus after a driver node has driven the data onto the bus and maintaining that data state on the bus until another driver drives a different data state onto the bus. Latching may be accomplished through any acceptable latching technique, including the provision of a separate latch circuit for each data line on the bus.

Brief Descriotion Of The Drawings

The appended claims set forth the present invention with particularity. However, the invention, and advantages thereof, may be best understood by reference to the following detailed description of a preferred embodiment taken in conjunction with the accompanying drawings, in which like reference characters identify like elements, and of which:

Figure 1 illustrates a general schematic of a computer system for use with the present invention;

Figure 2 illustrates the timing associated with one data bus control technique using tri-state drivers;

Figure 3 illustrates the timing associated with a second data bus control technique using open terminal drivers;

Figure 4 illustrates a general schematic representation of a preferred embodiment of the present invention;

Figure 5 illustrates a more specific schematic representation of a computer system in accordance with the teachings of the present invention; and

Figure 6 illustrates the timing associated with implementation of the preferred embodiment of the present invention in a computer system such as that of Figure 1.

Description Of A Preferred Embodiment

Generally, a preferred embodiment of the present invention provides a latch circuit means in association with a data bus in a computer system. The latch circuit means maintains a data state on the bus until a subsequent data state or vector is driven onto the bus. Data sampling may take place at any time after the data vector is fully driven onto the bus, regardless of whether the driving node is still enabled, until such time as another node begins driving a new data state onto the bus. The preferred embodiment envisions the use of a separate latch circuit for each data line in the data bus. However, it is within the scope of the present invention to provide a latch circuit means which controls more than one data line in the data bus.

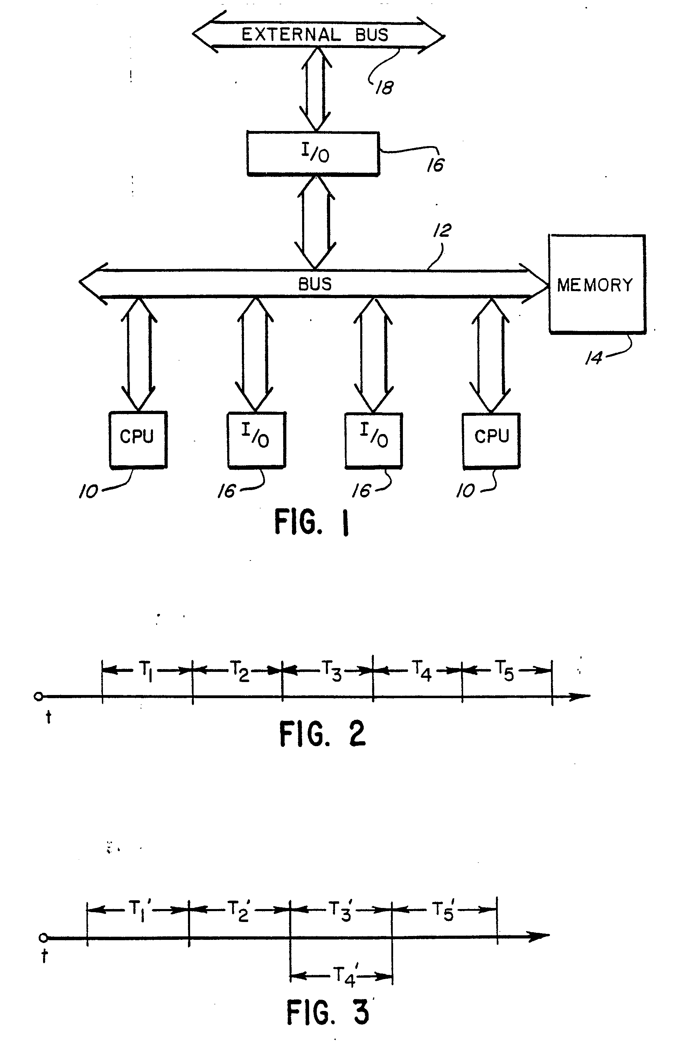

Referring now to the drawings, Figure 1 illustrates a general computer system in a schematic fashion. The present invention may be put to ready use in systems such as that illustrated in Figure 1. As shown, CPU units 10 communicate with a bus 12, which in turn communicates with memory, shown generally as memory unit 14, input/output devices, shown generally as I/O devices 16, and other bus networks, shown generally as an external bus 18. It should be appreciated that the system components shown generally in Figure 1 may comprise any typical components used commonly with data buses, such as that shown as bus 12, in computer systems. For example, I/O devices 16 may be display terminals, printers, modems or other input/output devices. Likewise, the external bus 18 may be an Ethernet bus operating under suitable control (bus controller not shown). Accordingly, the system of Figure 1 is shown solely by way of example.

As mentioned previously, the use of tri-state drivers typically requires the use of separate timing signals to initiate and terminate the enable periods for successively communicating drivers to avoid the various problems associated with simultaneous driving of the data bus. The timing of a typical data bus communication transaction using tri-state drivers is illustrated in Figure 2.

In Figure 2, time is shown on the horizontal axis, advancing from left to right. The period denoted as T1 represents a period of time required for a bus driver to be enabled and to drive a particular data state onto the bus. T2 then represents the period of time during which data may be sampled from the bus by one or more receiving nodes. This period may be longer or shorter than the illustrated period-depending upon the particular parameters of the operating computer system. T3 represents the time required for the first driver to be disabled. T4 begins after T3 ends and represents the time required for a subsequent driver to be enabled and to drive data onto the bus for sampling by receiver nodes. A subsequent sampling period T5 may begin in the technique illustrated by Figure 2 only after the end of the period labelled T4. No data sampling may occur during the periods T1 and T3 and T4. During these periods the data on the bus is indeterminate. It should be noted that the time periods T1 through T5 are intended to be only visual representations of appropriate time periods, are not drawn to scale and may in practice be longer or shorter than illustrated.

Referring now to Figure 3, therein is shown a timing diagram similar to that of Figure 2, except that the diagram of Figure 3 illustrates a data transaction for a data bus associated with open terminal drivers. Again, time is shown on the horizontal axis and advances from left to right. $T1'$ corresponds to the period T1 on Figure 2 and represents the time required for a first bus driver to enable and drive data onto the bus. $T2'$ corresponds to T2 from Figure 2 and represents the time during which data may be sampled from the bus. $T3'$ correspondingly represents the time required for the first driver to disable, while $T4'$ represents the time required for a second, succeeding driver to enable and to drive data onto the bus. $T3'$ and $T4'$ may overlap as illustrated, because open terminal drivers are being used, and no dangerous conditions are created by allowing two or more open terminal drivers to be enabled with respect to the bus simultaneously. However, the data on the bus is indeterminate during this period. The data driven onto the bus by the second driver during the period $T4'$ may then be sampled during the subsequent period $T5'$. Again, it should be noted that the time periods $T1'$ through $T5'$ are intended to be only visual representations of such time periods and may in practice be longer or shorter than illustrated.

From a review of the timing diagrams of Figures 2 and 3, it can be seen that data may be sampled from the bus during a relatively small fraction of the system operating time. Those periods denoted by T1, $T1'$, T3, $T3'$, T4 and $T4'$ represent time periods for which the bus must be inactive, thereby limiting data bandwidth for the computer system.

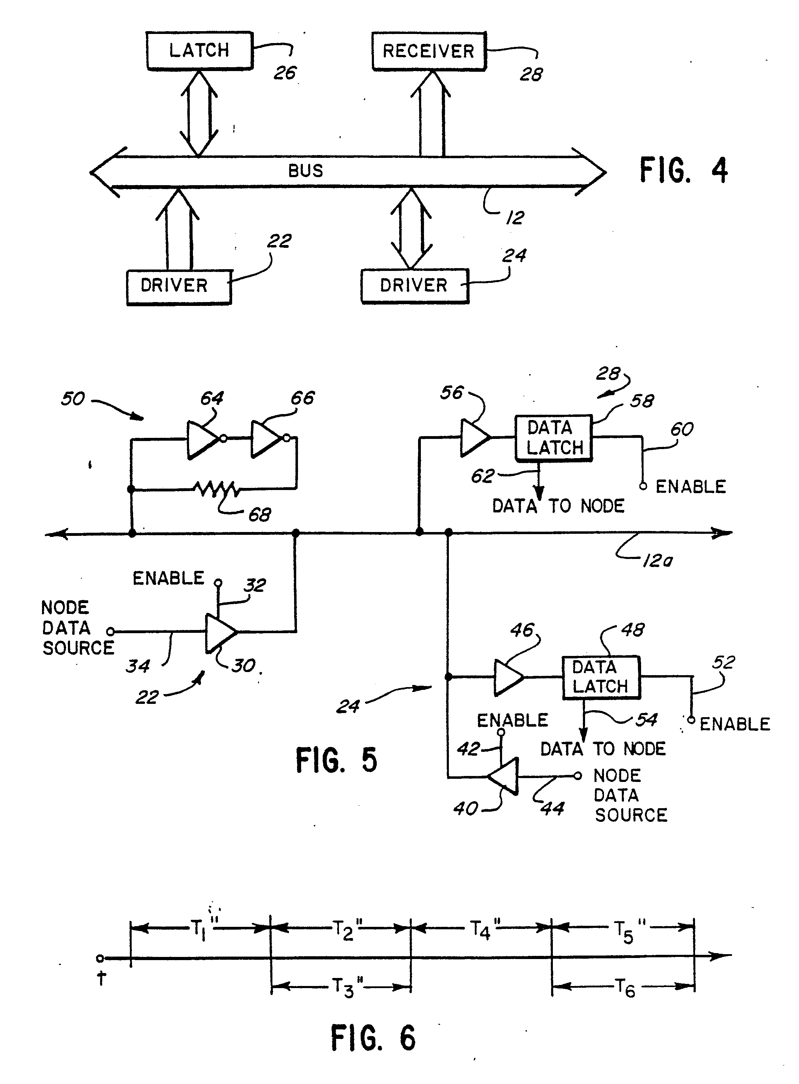

The present invention overcomes much of this inactive time through the implementation of a bus control system such as that shown in Figure 4. Therein, the bus 12 receives data from driver means 22 and 24. For the sake of illustration only two driver means are shown but it is within the scope of the invention that more or fewer driver means would be used. In addition, the driver means 22 and 24 are intended to include a transmit only node or a transceiver node, e.g., a node that both transmits and receives. Once the bus has been driven to a particular data state by one of the driver means 22 or 24, a latch circuit means 26 latches that data state onto the bus 12 until a different data state is subsequently driven onto the bus 12 by that driver or a different driver. The data which is latched on the bus 12 is sampled by receiver 28 or by one of the driver means 22 or 24 functioning as a receiver. For example, if the driver means 22 drives the bus 12 to a first data state, the latch circuit means 26 maintains that data state on the bus 12 until the driver means 22 or the driver means 24 drives the bus to a different data state. The latch circuit means 26 maintains the current data state on the bus regardless of the termination of the active drive by the driver node that originally drove that data state onto the bus.

Referring now to Figure 5, therein is shown a more specific schematic of a computer bus control system according to a preferred embodiment of the present invention. In Figure 5, the driver means 22 is shown as a transmit only node and driver means 24 is shown as a transceiver node. The driver means 22 and 24 are shown as being connected to only one line 12a of the bus 12, while in practice each would be connected to each line of bus 12. The latch circuit means 26 is shown in more detail, although only for use with a single bus line 12a. In practice, the latch circuit means 26 comprises a plurality of latch circuits 50 each connected to one of the multiple lines of the bus 12. The receiver means 28 is also shown in more detail and connected to only one line 12a of the bus 12, while in practice it would be connected to each line of bus 12. It is within the scope of the invention that other forms of driver means, receiver means and latch circuit means could be used. The driver means 22 comprises a drive amplifier 30 which responds to an enable signal received on a line 32 to drive node data from a line 34 onto the bus line 12a. Similarly, the driver means 24 comprises an amplifier 40 which responds to an enable signal received on a line 42 to drive node data from a line 44 onto the bus line 12a. In addition driver means 24 comprises an amplifier 46 which receives data from line 12a and is connected to data latch circuit 48. The data latch circuit 48 responds to a latch enable signal received on a line 52 to sample data from the bus line 12a and transfer that data to the node on a line 54. The receiver means 28 comprises an amplifier 56 connected to the bus line 12a. The amplifier 56 is coupled to a latch circuit 58 which responds to a latch enable signal on a line 60 to sample data from the bus line 12a and transfer that data to the node on line 62. The latch circuit means 26 means comprises a plurality of latch circuits 50, one of which is illustrated in Figure 5. Each latch circuit 50 comprises a pair of inverters 64 and 66 and a feedback resistance 68. It is also within the scope of this invention to use other circuits in place of the pair of inverters such as a noninverting amplifier. The input of the latch circuit 50 is connected to the bus line 12a.

In operation, one of the drive amplifiers 30 and 40, determined by which receives an enable signal, drives the bus line 12a to a particular state. In the preferred embodiment, the drivers are tri-state drivers. The act of driving the bus line 12a to a selected state activates the latch circuit 50 to hold that data state on the bus after the driving action terminates. The latch circuit 50 then holds the data state on the line 12a until a subsequent enable signal turns on another driver node amplifier, either amplifier 30 or amplifier 40 in Figure 5. Once that occurs, the holding action of the latch circuit 50 is overridden by the driving action of the node driver and the bus assumes the new state. However, the latch 26 then holds that data state on the bus until a subsequent driving action by another node driver. In this implementation, data may be sampled, by either driver means 24 functioning as a receiver or receiver means 28, from the bus at any time after active drive by one of the nodes.

The timing associated with the operation of a computer system according to the preferred embodiment of the present invention is illustrated in Figure 6. Once again, time is shown on the horizontal axis, advancing from left to right. The first period illustrated, $T1''$, represents the period required for the first driver node to be enabled in response to an enable signal and to drive the data bus line to a desired data state. The second period, $T2''$, represents the ensuing time period during which the data may be sampled from the data bus. This period overlaps with the period $T3''$ which represents the time required for the first driver to be disabled and removed from active communication with the bus. The latch maintains the integrity of the data state on the bus during this period.

Although shown as being identical in duration, the periods $T2''$ and $T3''$ need not be identical. The illustrated example represents merely the ideal operating circumstance, i.e., that data sampling will be complete by the time a preceding driver has been fully disabled. After the first driver is effectively removed from active communication with the bus, represented by the end of the period $T3''$, new data may be driven onto the bus from another (or the same) driver node. The illustrated interval $T4''$ represents the time required for the next driver to be enabled in response to an enable signal and drive the data bus to a new data state. $T5''$ then represents the interval during which this new data state may be sampled by receiver nodes from the data bus. Another interval is shown as corresponding to $T5''$. This interval, $T6$, represents the time required for the second driver to be disabled and removed from active communication with the bus. Again, it should be noted that the time period $T1'$ through $T6$ are intended to be only visual representations of appropriate time periods, are not drawn to scale and may in practice be larger or shorter than illustrated.

As shown by the timing diagram of Figure 6, the present invention allows the use of more power efficient tri-state drivers while optimizing data bus utilization. The only time data cannot be sampled from the bus in the preferred embodiment occurs while a driver is being enabled and actively driving data onto the bus, e.g., $T1''$ and $T4''$. Once the data state is driven onto the bus, it may be sampled at any time e.g., $T2''$ and $T5''$, because of the sustaining action of the latch circuit, until a subsequent data state is driven onto the bus by a driver node.

In the preferred embodiment, the feedback latch circuit 50 has a relatively weak drive compared to the node drivers since the latch circuit 50 is only required to maintain the level of the primarily driven data, as opposed to being required to create fast signal transitions. Also, the resistance 68 may be either a discrete resister or may be simply the inherent output impedance of the second invertor 66. The actual value of the resistance can fall anywhere between a maximum determined by the DC loading of the bus and the need to maintain valid logic states between drives and a minimum value just sufficiently high that the drivers can overcome the latch. Generally, the resistance value represents some mean value between the output impedance of the drivers and the sum of the input impedances for the various receiver nodes (typically for 8-10 receiver nodes, but conceivably for as many as 40 or more) associated with the bus. In TTL logic systems, this ratio is about 100:1, whereas in CMOS systems, this ratio is about 10,000:1. Thus for ease of use, operation and construction and for optimal signal processing, the preferred embodiment contemplates the use of CMOS circuitry. Correspondingly, the latch comprises two CMOS inverters 64 and 66 constructed as an ideal driver.

The foregoing description of a preferred embodiment should be taken as a non-limiting example of one implementation of the present invention. The invention itself is set forth in the following claims. The claims should be deemed to encompass at least the specific embodiments disclosed above, as well as such modifications and alterations as would be apparent to one of ordinary skill in the computer art and familiar with the teachings of this application. The appropriate scope of the invention may be measured by the claims in view of the foregoing description and the relevant prior art.

## Claims

1. A data bus control system for computer system communication comprising:
bus means for communicating data;
driver means coupled to said bus means for driving data onto said bus means;
receiver means coupled to said bus means for sampling data from said bus means;
latch means coupled to said bus means for latching data on said bus in response to said driver means driving data onto said bus means.

2. The data bus control system of claim 1 wherein said driver means comprises tri-state driver means.

3. The data bus control system of claim 1 wherein said bus means comprises a plurality of communication lines and wherein said latch means comprises a plurality of feedback latch circuits each coupled to one of said communication lines.

4. The data bus control system of claim 3 wherein each of said feedback latch circuits comprises a pair of inverter circuits coupled in series and a feedback resistance coupled to each of said communication line.

5. The data bus control system of claim 3 wherein each of said feedback latch circuits comprises:
a first inverter circuit having an output and an input which is coupled to one of said communication lines of said bus means;
a second inverter circuit having an output and an input which is coupled to said output of said first inverter circuit; and
a resistance means coupled between said output of said second inverter circuit and one of said communication lines.

6. The data bus control system of claim 5 wherein said output of said second inverter circuit is coupled to one of said communication lines and wherein said resistance means is an inherent output impedance associated with said second inverter circuit.

7. A data bus control system for computer system communication comprising:
bus means for communicating data;
first driver means coupled to said bus means for driving data onto said bus means
second driver means coupled to said bus means for driving data onto said bus means; and,
latch means coupled to said bus means for latching data on said bus means in response to said first driver means driving data onto said bus means and for maintaining said latched data on said bus means after said first driver means is disabled and until said first driver means again drives data onto said bus means or said second driver means drives data onto said bus means; and,
Receiver means coupled to said bus means for sampling said latched data. ·

8. A data bus control system for computer system communication comprising:
bus means for communicating data;
first driver means coupled to said bus means for driving data onto said bus means;
second driver means coupled to said bus means for driving data onto said bus means;
latch means coupled to said bus means for latching data on said bus means in response to said first driver means driving data onto said bus means; and,
receiver means coupled to said bus means for sampling said latched data at any time before said first driver means again drives data onto said bus means or said second driver means begins to drive data onto said bus means.

9. A method for controlling data transfer for computer system communication comprising:
driving data onto a bus for transfer;
latching said data on said bus; and,
repeating said driving and latching steps each time data is to be transferred on said bus.

10. The method of claim 9 further including sampling said data on said bus after said latching step.

11. The method of claim 9 further including the step of discontinuing said driving after a data state has been driven onto said bus and latched.

12. The method of claim 11 further including sampling said latched data on said bus after said driving is discontinued.

13. The method of claim 11 further including sampling said latched data on said bus during the step of discontinuing said driving.

14. The method of claim 11 further including sampling said latched data on said bus before the step of repeating said driving.

15. A method for controlling data transfer for computer system communication comprising:
driving data onto a bus for transfer;
latching said data on said bus;
discontinuing said driving after a data state is driven onto said bus and latched; and,
sampling said data latched on said bus during and after said step of discontinuing said driving.

16. A method for controlling data transfer for computer system communication comprising:
driving data onto a bus for transfer;
latching said data on said bus;
discontinuing said driving after a data state is driven onto said bus and latched;
driving new data onto said bus for transfer;
sampling said data latched on said bus at any time before said step of driving new data onto said bus.

17. A method for data communication on a computer system bus comprising:
enabling a driver to drive data onto said bus;
latching said data from said driver on said bus;
disabling said driver after said data is latched on said bus;
sampling said latched data on said bus during and after said disabling step; and
enabling a driver to drive new data onto said bus following said step of sampling said latched data.

18. The method for data communication, as recited in claim 16, wherein said steps of enabling a driver comprises enabling a tri-state driver.

19. A method for data communication on a computer bus comprising:
enabling a driver to drive data onto said bus;
latching said data from said driver on said bus;
disabling said driver after said data is latched on said bus;
enabling a driver to drive new data onto said bus; and
sampling said latched data on said bus at any time before said step of enabling a driver for driving new data onto said bus.

20. The method for data communication, as recited in claim 18, wherein said steps of enabling a driver comprises enabling a tri-state driver.

21. A method for data communication on a computer system bus comprising:
enabling a driver to drive data onto said bus;
latching said data from said driver on said bus;
disabling said driver after said data is latched on said bus;
overcoming said latching by enabling a driver to drive new data onto said bus; and,
sampling said latched data on said bus at any time before the step of overcoming said latching.

22. A method for data communication control comprising:
enabling a tri-state driver to drive a desired data state onto a data bus;
latching said data state on said data bus;
disabling said tri-state driver from driving data onto said data bus;
enabling another tri-state driver to drive a new desired data state onto said data bus;
sampling said latched data state from said bus at any time before enabling said another tri-state driver;
latching said new data state on said data base;
disabling said another tri-state driver from driving data onto said data bus; and,
sampling said latched new data state from said bus after said latching of said new data.

EXTERNAL BUS

_18_

I/O _16_

_12_

BUS

MEMORY

_14_

CPU _10_

I/O _16_

I/O _16_

CPU _10_

FIG. 1

$\xleftarrow{T_1}$ $\xleftarrow{T_2}$ $\xleftarrow{T_3}$ $\xleftarrow{T_4}$ $\xleftarrow{T_5}$

t

FIG. 2

$\xleftarrow{T_1'}$ $\xleftarrow{T_2'}$ $\xleftarrow{T_3'}$ $\xleftarrow{T_5'}$

t

$\xleftarrow{T_4'}$

FIG. 3

FIG. 4

FIG. 5

FIG. 6